# EUROPEAN PATENT SPECIFICATION

(11) **EP 4 099 687 B1**
(45) Date of publication and mention of the grant of the patent: **29.04.2026**
(21) Application number: 20916539.8
(22) Date of filing: 30.01.2020
(51) Int. Cl.: H04N 5/66, H04N 5/91, H04N 7/18, H04N 21/854

(54) **VIDEO DISTRIBUTION DEVICE, VIDEO DISTRIBUTION SYSTEM, VIDEO DISTRIBUTION METHOD, AND PROGRAM**
VIDEOVERTEILUNGSVORRICHTUNG, VIDEOVERTEILUNGSSYSTEM, VIDEOVERTEILUNGSVERFAHREN UND PROGRAMM
DISPOSITIF DE DISTRIBUTION DE VIDÉO, SYSTÈME DE DISTRIBUTION DE VIDÉO, PROCÉDÉ DE DISTRIBUTION DE VIDÉO ET PROGRAMME

(43) Date of publication of application: 07.12.2022
(73) Proprietor: Amatelus Inc., Tokyo 150-0002 (JP)
(72) Inventor: SENOKUCHI, Izuru, Tokyo 150-0002 (JP)
(74) Representative: AWA Sweden AB
(86) International application number: PCT/JP2020/003331
(87) International publication number: WO 2021/152758

(56) References cited:
- WO-A1-2018/030206
- WO-A1-2018/070092
- JP-A- 2013 183 209
- JP-A- 2015 186 148
- JP-A- 2019 525 628
- US-A1- 2011 078 717
- US-A1- 2012 113 264
- US-A1- 2016 192 009
- US-A1- 2016 269 794

## Description

### [Technical Field]

The present invention relates to a technology for utilizing free viewpoint video data, for example, and in particular to a technology for editing free viewpoint video data to generate and distribute, for example, teaching files for autopilot.

### [Background of the Invention]

A wide variety of technologies for utilizing free viewpoint video data, for example, have been prevailed. In this situation, various technologies have been proposed for video distribution device that utilizes images captured by multiple cameras. For example, a technology for changing the viewpoint on a subject using the arrangement state of some cameras specified in advance by the user from among multiple cameras with different viewpoints on the same subject as reference is publicly known (see, for example, patent document 1). In this technology, a user-specified camera as well as one or more other cameras that capture images used to generate a series of combined video images are specified as a group, the captured video images of the cameras in this specified group are switched at a predetermined switching time point and combined, and the order of combining the images is determined to generate a series of combined video images.

**In** contrast, a technology for creating a single video by editing multiple videos simultaneously captured by multiple cameras is known (see, for example, patent document 2). This technology includes: a live-view image acquisition unit, which is connected to a plurality of cameras capable of capturing videos wirelessly or wired, and acquires one or more live-view images from the cameras; a display, which displays the one or more live-view images acquired by the live-view image acquisition unit; an operation unit, which manually switches the live-view images to be displayed on the display; an operation history recorder, which records operation history information indicating an operation history by the operation unit; and a video editing unit, which automatically creates a single video on the basis of the videos captured by the cameras and the operation history information recorded in the operation history recorder after the video capture by the cameras is completed. US 2016/192009 A1 relates to a video delivery method for delivering videos captured from a plurality of view points, video reception method, server, and terminal device. US 2012/113264 A1 relates to a multi-feed event viewing method. WO 2018/070092 A1 discloses distribution of free-viewpoint video data together with viewpoint switching information generated by a provider. During playback at a terminal, this metadata enables automatic switching to specific viewpoints based on time, priority, or conditions.

### [Prior Art Documents]

### [Patent Documents]

[Patent Document 1] Japanese Laid-Open Patent Publication No. 2015-177394
[Patent Document 2] Japanese Registered Patent No. 6302564

### [Summary of the Invention]

### [Problems to be Solved by the Invention]

However, patent document 1 discloses a technique for combining videos captured by multiple cameras, every time when each of which is captured, and does not disclose a feature in which the videos are edited and teaching files for autopilot are generated.

In the same manner, patent document 2 merely discloses video editing in which a single video is automatically created on the basis of a plurality of videos captured by a plurality of cameras and operation history information, and does not disclose the addition of annotations such as text and audio to the video or the distribution of the edited result as a teaching file for autopilot.

An object of the present invention is to provide a technology for generating and distributing teaching files for autopilot by editing free viewpoint video data, for example.

### [Means to Solve the Problems]

To solve the above problem, a video distribution system according to a first aspect of the present invention is directed to a video distribution system including a video distribution device and a terminal device, wherein the video distribution device includes: a distributor, which distributes free viewpoint video data; a first acquisition unit, which acquires teaching data from the terminal device; and a teaching file generator, which generates a teaching file for automatic playback on the basis of the teaching data, and the terminal device includes: a second acquisition unit, which acquires free viewpoint video data from the video distribution device; a video generator, which generates video on the basis of the free viewpoint video data; a display, which displays the video; and an editing unit, which edits the free viewpoint video data and transmits the teaching data.

A video distribution device according to a third aspect of the present invention is directed to a video distribution device capable of communicating with a terminal device, where the video distribution device includes: a distributor, which distributes free viewpoint video data; a first acquisition unit, which acquires teaching data from the terminal device; and a teaching file generator, which generates a teaching file for automatic playback on the basis of the teaching data, wherein the teaching data includes at least one of the following: screen teaching data, which teaches a screen form, content teaching data, which teaches a content, and annotation teaching data, which teaches addition of at least one of text, graphic, symbol, and audio.

A program according to a fifth aspect of the present invention causes a computer to serve as: a distributor, which distributes free viewpoint video data; a first acquisition unit, which acquires teaching data from a terminal device; and a teaching file generator, which generates a teaching file for automatic playback on the basis of the teaching data, wherein the teaching data includes at least one of the following: screen teaching data, which teaches a screen form, content teaching data, which teaches a content, and annotation teaching data, which teaches addition of at least one of text, graphic, symbol, and audio.

A video distribution method according to a seventh aspect of the present invention is directed to a video distribution method by a video distribution system including a video distribution device and a terminal device, where the method includes the steps of: causing the video distribution device to distribute free viewpoint video data; causing the terminal device to acquire free viewpoint video data from the video distribution device, generate video on the basis of the free viewpoint video data, display the video, edit the free viewpoint video data, and transmit teaching data; and causing the video distribution device to acquire the teaching data from the terminal device and generate a teaching file for automatic playback on the basis of the teaching data.

### [Advantageous Effects of the Invention]

The present invention provides a technology that generates teaching files for autopilot by editing free viewpoint video data, for example, and distributes the generated teaching files.

### [Brief Description of the Drawings]

FIG. 1 is a diagram illustrating a configuration of a video distribution system according to an embodiment of the present invention;
FIG. 2 is a diagram illustrating a configuration of a video distribution device in the system,
FIG. 3 is a diagram illustrating a configuration of a terminal device in the system,
FIG. 4 illustrates an example of an editing screen,
FIGS. 5A to 5D illustrate video data and division data,
FIGS. 6A to 6C illustrate switching of the division data,
FIG. 7 illustrates a configuration of screen teaching data,
FIG. 8 illustrates a configuration of content teaching data,
FIG. 9 illustrates a configuration of annotation teaching data,
FIG. 10 illustrates a configuration of annotation teaching data,
FIG. 11 illustrates an order of generated still image data,
FIG. 12 is a flowchart illustrating the processing steps for editing free viewpoint video data, for example, using the system,
FIG. 13 is a flowchart illustrating the detailed processing steps of the editing process, and
FIG. 14 is a flowchart illustrating the processing steps for playback on the basis of the teaching file for autopilot, for example.

### [Best Mode for Carrying out the Invention]

One embodiment of the present invention will be described below with reference to the drawings.

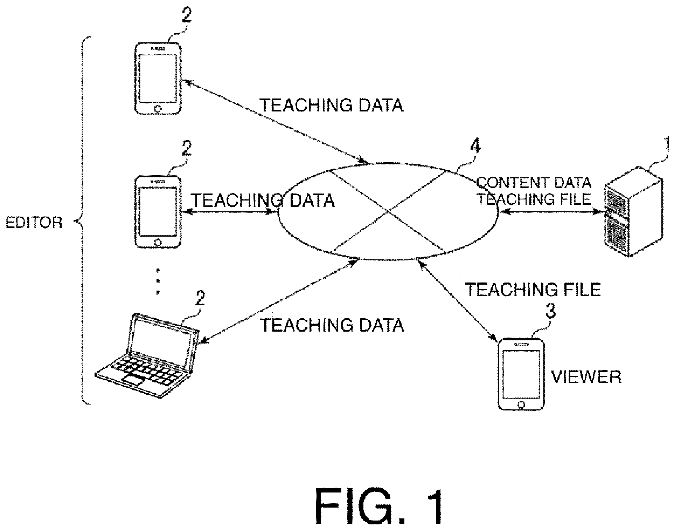

FIG. 1 illustrates a configuration of a video distribution system according to an embodiment of the present invention.

As shown in FIG. 1, the video distribution system includes a video distribution device 1, a terminal device 2 for an editor, and a terminal device 3 for a viewer, which are connected wirelessly or wired to a communication network 4 such as the Internet. The video distribution device 1 may be embodied by one or more server devices or computers, for example. As the terminal device 2 for the editor, various types of terminals may be employed if they are capable of receiving operation input, for example, and displaying information, such as a smartphone, tablet terminal, notebook personal computer, desktop personal computer, and head-mounted display. In the same manner, as the terminal device 3 for the viewer, various types of terminals may be employed if they are capable of receiving operation input, for example, and displaying information, such as a smartphone, tablet terminal, notebook personal computer, desktop personal computer, and head-mounted display.

**In** this configuration, upon receiving a request from the terminal device 2 for the editor, the video distribution device 1 transmits free viewpoint video data, for example, in which the subject is captured by a plurality of cameras, to the terminal device 2 for the editor. The terminal device 2 for the editor displays a predetermined editing screen, which will be described below, allowing the editor to, while viewing the free viewpoint video data, switch (viewpoint switching) the images, zoom in and out the images, add various annotations (text, graphics, symbols, and audio, for example) to the images, for example, and transmit the teaching data as the result of the editing to the video distribution device 1. In the case where a plurality of editors are present, the teaching data is transmitted from each terminal device 2 for the editor to the video distribution device 1. As the video distribution system 1 receives the teaching data, it generates a teaching file for autopilot on the basis of the teaching data. Further, the video distribution system 1 presents the teaching file for autopilot to the terminal device 3 for the viewer in a distributable manner. The file may be presented on a dedicated website or on a screen displayed by executing an application program on the terminal device 2.

The term "autopilot" refers to the display of free viewpoint video data by automatically switching viewpoints and shifting playback time positions, for example, on the basis of the contents of the teaching file, without causing the viewer to optionally make operations. The phrase "live autopilot" refers to the sequential generation and distribution of the teaching files for autopilot after an optionally specified predetermined time has elapsed, or immediately as possible, which may be performed independent of the distribution format such as live or on-demand distribution of free viewpoint video data.

As the teaching file for autopilot is selected on a website, for example, provided by the video distribution device 1, and distribution is requested via the terminal device 3 for the viewer, the video distribution device 1 distributes the selected teaching file for autopilot to the terminal device 3 for the viewer. At this time, it may be determined whether the teaching file may be distributed and whether the presence or absence of the teaching file may be displayed depending on the authorization possessed by the viewer. Accordingly, for example, although the presence or absence of the teaching file may be displayed to all users, the distribution of the teaching file may be allowed only to those with purchased authorization, or the teaching file itself may be prevented from being displayed if the user does not have purchased authorization.

When the terminal device 3 for the viewer receives the teaching file for autopilot, it plays back the free viewpoint video on the basis of the teaching file. Conventionally, although the terminal device 3 for the viewer would play back the free viewpoint video while causing the viewer to switch her/his viewpoint to the desired viewpoint, for example, the present embodiment embodies useful playback while automatically switching viewpoints, for example. The contents may be acquired either by online streaming, downloading, or a combination of the two, for example, for the playback of the free viewpoint video.

That is, once the terminal device 3 for the viewer has downloaded the teaching file and free viewpoint video data, it is allowed to freely play back the free viewpoint video even if it is not in a communicationable environment, and to cause the viewer to edit the video and regenerate the teaching file. Further, even if only the free viewpoint video data is downloaded, the viewer is allowed to generate teaching data and teaching file by editing the free viewpoint video data. Moreover, the viewer is also allowed to optionally transmit the teaching file edited, generated, or regenerated by the terminal device 3 to the video distribution device 1, be granted authorization, and cause the file to be distributed.

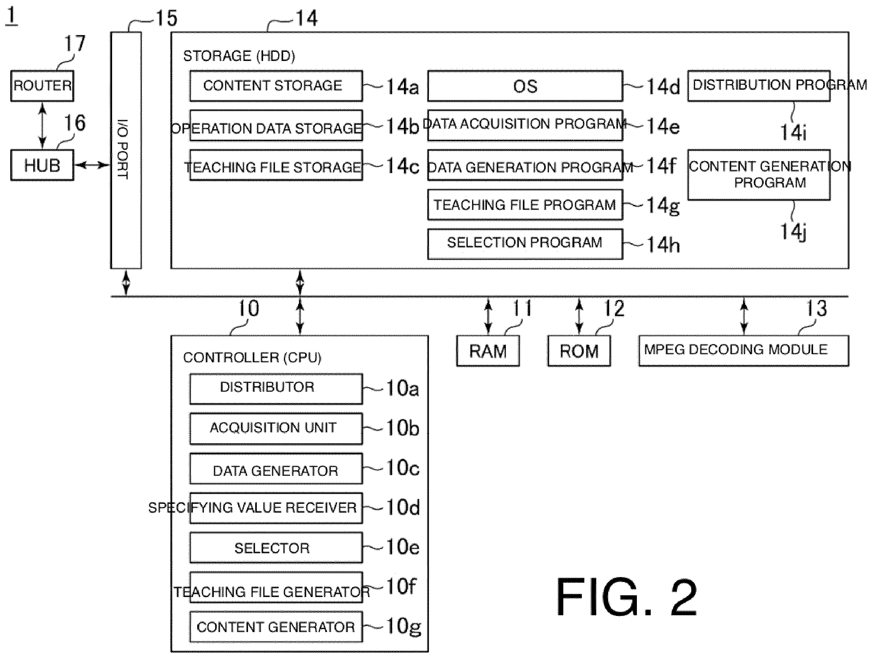

FIG. 2 illustrates the detailed configuration of the video distribution device in the video distribution system.

As shown in FIG. 2, the video distribution device 1, which is configured by a server device, for example, includes a controller 10 for overall control, a random access memory RAM 11 and a read only memory ROM 12 as memory, an MPEG decoding module 13, a storage 14 configured by a hard disk drive HDD, a solid state drive SSD, and flash memory, for example, and an I/O port 15, which are connected to the bus lines. The router 17 is connected through the HUB 16 to the I/O port 15. The controller 10 may be configured by, for example, a central processing unit CPU, a microprocessor, a multiprocessor, an ASIC, and an FPGA, for example.

The storage 14 includes a content storage 14a, an operation data storage 14b, and a teaching file storage 14c. The content storage 14a may store the free viewpoint video data, and still image data divided from the free viewpoint video data, for example. The operation data storage 14b may store operation data transmitted from the terminal device 2 for the editor, for example. In addition, the teaching file storage 14c may store the generated teaching file for autopilot.

The storage 14 may also store an OS 14d, a data acquisition program 14e, a data generation program 14f, a teaching file generation program 14g, a selection program 14h, a distribution program 14i, and a content generation program 14j. Accordingly, the controller 10 serves as the distributor 10a by executing the distribution program 14i, serves as the data acquisition unit 10b by executing the data acquisition program 14e, serves as the data generator 10c by executing the data generation program 14f, serves as the specifying value receiver 10d and selector 10e by executing the selection program 14h, and serves as the teaching file generator 10f by executing the teaching file generation program 14g. The controller 10 executes the content generation program 14j to serve as the content generator 10g as well.

The acquisition unit 10a acquires multiple video data as free viewpoint video data via the I/O port 15. In the present embodiment, the acquisition unit 10a acquires a plurality of video data in which a subject is captured from different directions. The content storage 14a stores the acquired free viewpoint video data.

The data generator 10c generates still image data by extracting a frame as a still image for each predetermined time period from the free viewpoint video data acquired by the acquisition unit 10b, i.e., each of the plurality of video data. More specifically, the data generator 10c decompresses the video data stored in the content storage 14a with the MPEG decoding module 13 to a set of still image data, and then stores the set in the content storage 14a. In this case, each still image data is stored in association with the time data indicating the time point at which each still image data is captured.

The specifying value receiver 10d receives a direction specifying value (operation data) from the terminal device 3 for the viewer, which value specifies the position data in the still image data that the viewer wishes to view. The selector 10e selects still image data along the time data on the basis of the direction specifying value received by the specifying value receiver 10d, and transmits it to the terminal device 3 for the viewer via the communication network 4. In this embodiment, the terminal device 3 for the viewer receives the still image data and generates the video.

The teaching file generator 10f generates a teaching file for autopilot on the basis of the teaching data from the terminal device 2 for the editor and stores it in the teaching file storage 14c. The file structure of the teaching file will be described in detail below. The distributor 10a reads the specified teaching file for autopilot from the teaching file storage 14c in accordance with the distribution request from the terminal device 3 for the viewer, and transmits the file to the terminal device 3 for the viewer via the communication network 4. In this transmission, the corresponding content data (including divided still image data) may be transmitted simultaneously, or the corresponding content data may be transmitted each time during the viewing process.

The content generator 10g generates content for free viewpoint video data or streaming video data, for example, on the basis of the free viewpoint video data and teaching file. This content is also transmitted to the terminal device 3 for the viewer by the distributor 10a.

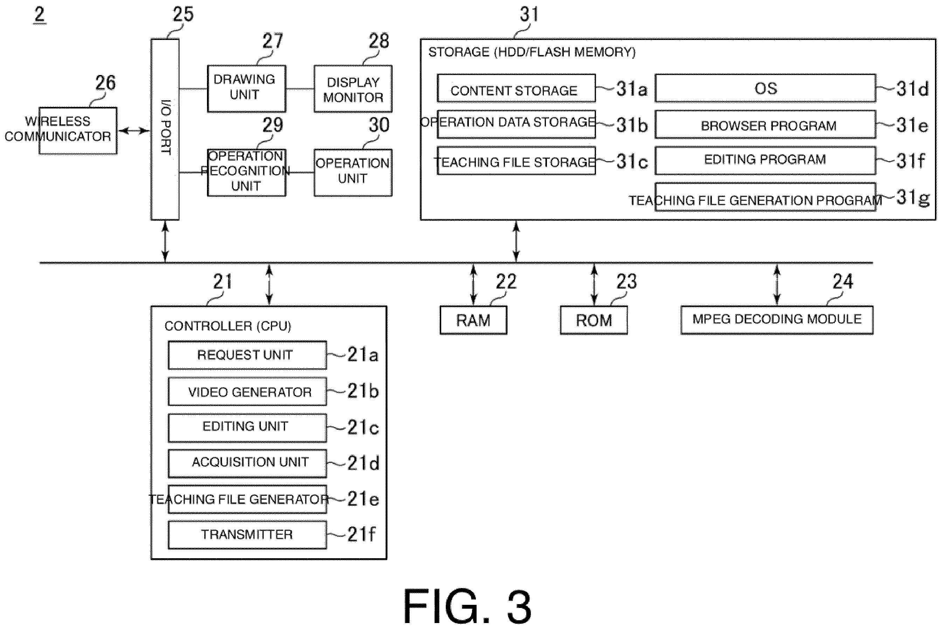

FIG. 3 illustrates the configuration of the terminal device 2 for the editor in the video distribution system. The basic configuration of the terminal device 3 for the viewer is the same as that of the terminal device 2.

As shown in FIG. 3, the terminal device 2 for the editor (as well as the terminal device 3 for the viewer) includes a controller 21, a RAM 22, a ROM 23, a JPEG decoding module 24, an I/O port 25, a wireless communicator 26, a drawing unit 27, a display monitor 28, an operation recognition unit 29, an operation unit 30, and a storage 31. The units are connected via the bus lines. The controller 10 may be configured by, for example, a CPU, microprocessor, multiprocessor, an ASIC, and/or FPGA, for example. The storage 31 may include an HDD or flash memory.

The storage 31 includes a content storage 31a, an operation data storage 31b, and a teaching file storage 31c. The content storage 31a stores the free viewpoint video data and still image data, for example, transmitted from the video distribution device 1. When the viewpoint or other aspects of the playback video are changed on the basis of the screen operations, the operation data storage 31b stores the operation data. In addition, the teaching file storage 31c stores the teaching files transmitted from the video distribution device 1 and the teaching data generated during editing.

The storage 31 stores an OS 31d, a browser program 31e, an editing program 31f, and a teaching file generation program 31g. Accordingly, the controller 21 serves as a request unit 21a, an acquisition unit 21d, and a transmitter 21f on the basis of the OS 31d, serves as a video generator 21b by executing the browser program 31e, and serves as the editing unit 21c by executing the editing program 31f. If the display monitor 28 of the terminal device 3 for the viewer corresponds to a touch panel, the storage 31 stores the touch panel control firmware. The controller 21 serves as the teaching file generator 21e by executing the teaching file generation program 31g.

In editing, the following processes are performed by the units. That is, the request unit 21a makes a request for free viewpoint video data (including divided still image data) to the video distribution device 1. The wireless communicator 26 connected via the I/O port 25 transmits the request. A wired communicator may be provided in place of the wireless communicator 26. The acquisition unit 21d acquires free viewpoint video data (including divided still image data) transmitted from the video distribution device 1. The video generator 21B generates content that may be displayed on the terminal device 3 from the free viewpoint video data. At this time, the drawing unit 27 controls the display on the display monitor 28. The JPEG decoding module 24 decodes the acquired still image data.

The editing unit 21c performs editing processing including changing the viewpoint of the free viewpoint video data (including divided still image data), screen allocating, enlarging/reducing, changing the playback speed, and adding annotations (text, graphics, symbols, and audio, for example) on the basis of the operations by the editor on a screen of which details will be described below, generates teaching data, and stores it in the teaching file storage 31c. When a part of the teaching data corresponds to operation data, the operation recognition unit 29 recognizes the operation of the operation unit 30 and stores it as operation data including the direction specifying value in the operation data storage 31b. The teaching file generator 21e generates a teaching file for autopilot on the basis of the teaching data and stores it in the teaching file storage 31c. The transmitter 21f transmits content data (e.g., streaming video data, for example) in the content storage 31a, teaching data, and teaching files, for example, to the video distribution device 1 via the wireless communicator 26.

In contrast, in the case of playback on the basis of the teaching file for autopilot, the following processes are performed by the units. That is, the request unit 21A requests a teaching file for autopilot to the video distribution system 1. The acquisition unit 21d acquires the teaching file for autopilot transmitted from the video distribution device 1. At this time, the acquisition unit 21A may acquire content data such as 3D point group data, 3D computer graphics, video data or still image data needed for playback. The video generator 21b then generates video on the basis of the teaching file, and the drawing unit 27 plays the video on the display monitor 28. If the teaching file contains annotation data, for example, playback of audio, text, and graphics, for example is performed at the time point defined in the teaching file as well as the playback of the video.

If, in the process of playback on the basis of the teaching file for autopilot, the viewer operates the operation unit 30 and instructs a change of viewpoint, for example, the operation recognition unit 29 recognizes the operation and generates operation data associated with the direction specifying value. The request unit 21a transmits the operation data associated with the direction specifying value to the video distribution device 1 to request a change of viewpoint, for example. When the acquisition unit 21d acquires the free viewpoint video data (including divided still image data) with a changed viewpoint, for example, from the video distribution device 1, playback on the basis of the teaching file is temporarily stopped and playback with a changed viewpoint is executed.

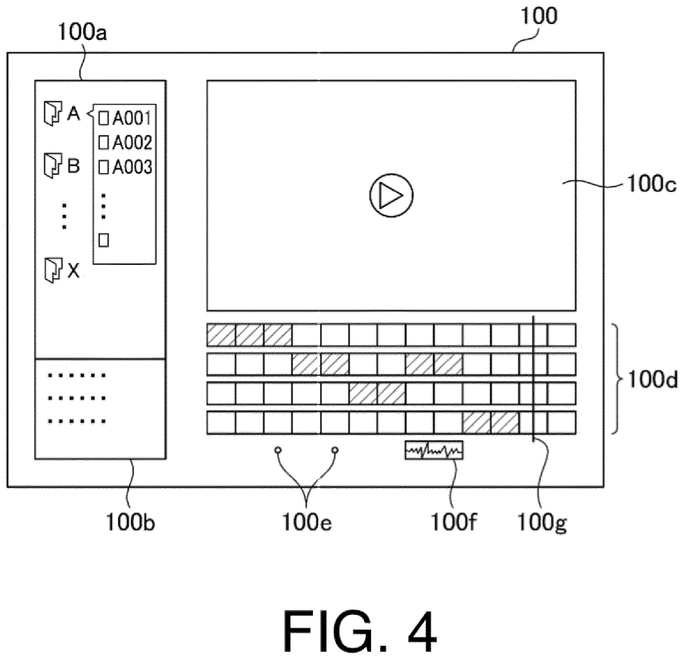

FIG. 4 illustrates an example of an editing screen displayed on the terminal device 2 for the editor.

As shown in FIG. 4, on the region 100a of the editing screen 100, the free viewpoint video data files that may be selected for editing are presented, allowing the editor to select the free viewpoint video data for editing (in this example, divided still image data). The region 100b may be used for writing chats so that when a plurality of editors divides the editorial work, for example, they are allowed to proceed the work while communicating with each other. In addition to the chats, edit logs and other information may be displayed on the region 100b, and unneeded edits may be disabled, or disabled edits may be restored depending on their authorization. Separate display regions and functions for voice calls, and/or video chats, for example, may be provided.

On the region 100c, the playback display is performed on the basis of the selected free viewpoint video data. On the region 100d, the free viewpoint video data selected for editing on the region 100a is divided into predetermined units, and each division unit is indicated with a thumbnail, for example. In this example, the selected division unit is indicated by a dashed line. In the editing process, various annotations may be added to each division unit by operating the operation unit 30. FIG. 4 shows that annotations 100e such as text and graphics are added, and an audio annotation 100f is added. FIG. 4 also shows a current position 100g of the live at a time when editing, as in following the live distribution. In addition to the above, a degree of delay from the current live distribution, and a remaining time to an optional time when the video may be played back after the optional time as a live distribution, for example, may be displayed.

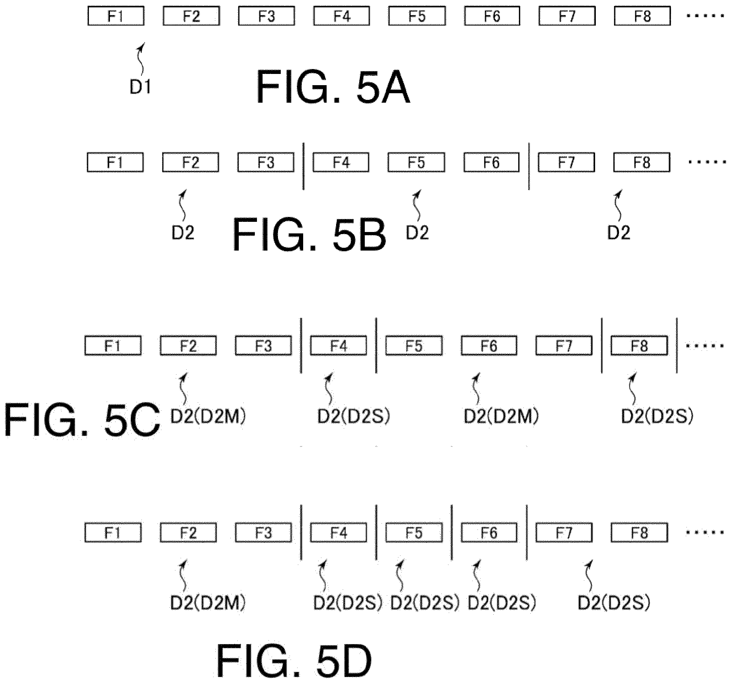

With reference to FIGS. 5A through 5D, the video data and division data conceptually included in the free viewpoint video data will be described in detail.

As shown in FIG. 5A, video data D1 is configured by a plurality of frames F1, F2, F3... The data generator 10c of the video distribution device 1 may divide the video data into a plurality of units of frames and store the video data in units of the division data in the content storage 14a. For example, as shown in FIG. 5B, if the video data is divided into units of three frames, the frames of the video data are sequentially divided into, for example, division data D2 with frames F1 to F3, and division data D2 with frames F4 to F6.

The data generator 10c may also divide the video data into a plurality of frames and one frame, and store them in units of the division data in the content storage 14a. In this case, for example, as shown in FIG. 5C, the division data is configured by a plurality of division data (D2M), which is configured by a plurality of frames, and a single division data (D2S), which is configured by a single frame.

The data generator 10c may also divide the video data such that a single unit of a plurality of division data and a plurality of single division data are arranged alternately in chronological order, and store them in the content storage 14a. In this case, as shown in FIG. 5D, the video data is divided into a single unit of a plurality of division data and a plurality of single division data alternatively in a chronological order, e.g., a single unit (D2M) of a plurality of division data with frames F1 to F3, a plurality of single division data D2S each made by dividing the video data into a frame F4, frame F5...

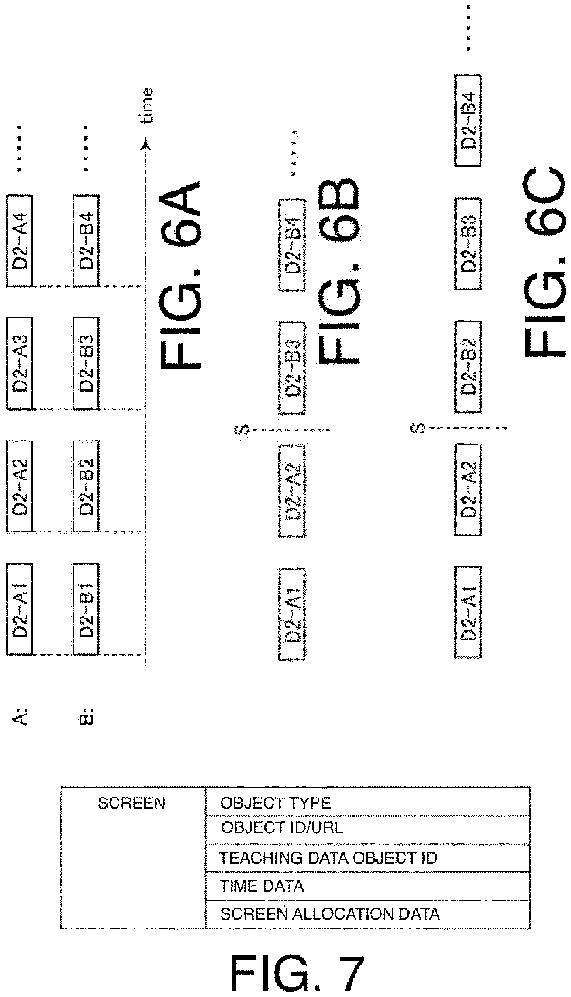

Next, with reference to FIGS. 6A through 6C, switching of division data will be described.

As shown in FIG. 6A, in this embodiment, the division data D2-A1, D2-A2, D2-A3, D2-A4... obtained by dividing the video data A, and the division data D2-B1, D2-B2, D2-B3, D2-B4... obtained by dividing the video data B may be configured by frames obtained by capturing images at the same or nearly the same image capture time. However, depending on the other implementation, the images may be captured at different image capture times.

As shown in FIG. 6B, after the distributor 10a sequentially transmits the division data D2-A1 and D2-A2 on the basis of the video data A, the distributor 10a receives a switching request from the terminal device 3 for the viewer, then the distributor 10A reads the division data D2-B3, which is immediately after the division data D2-A2 in terms of time, from the content storage 14a, and then the distributor 10A reads the division data D2-B4..., which is after the division data D2-B3 in terms of time, from the content storage 14A, and sequentially transmits the read division data.

Further, as shown in FIG. 6C, after the distributor 10a sequentially transmits the division data D2-A1 and D2-A2 on the basis of the video data A, the distributor 10a receives a switching request from the terminal device 3 for the viewer, then the distributor 10A reads the division data D2-B2, which is at the same time point as that of the division data D2-A2 in terms of time, from the content storage 14a, and then the distributor 10A reads the division data D2-B3..., which is after the division data D2-B2 in terms of time, from the content storage 14A, and sequentially transmits the read division data.

The information on the time of the image capture is added to each video data, allowing the distribution unit 10a to read and distribute the divided data and other divided data consecutively or almost consecutively in time on the basis of the information on the time of the image capture.

Next, with reference to FIGS. 7 through 10, the structure of the teaching file for autopilot generated by the teaching file generator 10f will be described in detail. The teaching files may include screen teaching data, content teaching data, and annotation teaching data.

FIG. 7 illustrates the structure of the screen teaching data included in the teaching file.

As shown in FIG. 7, the screen teaching data includes object type, object ID/URL, teaching data object ID, time adjustment data, and screen allocation data. The object type corresponds to a screen. The object ID/URL corresponds to the object ID in the teaching data. The time adjustment data corresponds to data to operate with a time code in which the adjustment time is taken into account when the screen allocation data includes the time code. The screen allocation data basically corresponds to the same as the screen allocation data of the content teaching data described below.

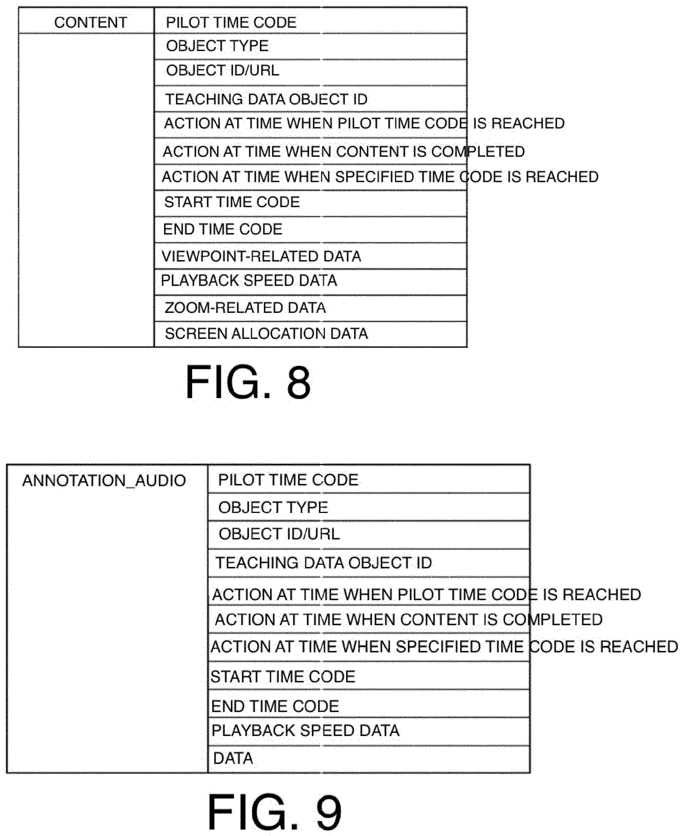

FIG. 8 illustrates the structure of the content teaching data included in the teaching file.

As shown in FIG. 8, the content teaching data includes pilot time code, object type, object ID/URL, teaching data object ID, action at a time when pilot time code is reached, action at a time when content is completed, action at a time when specified time code is reached, start time code, end time code, viewpoint-related data, playback speed data, zoom-related data, and screen allocation data.

The pilot time code defines the start time on autopilot. The object type is directed to content. The object ID/URL is directed to an ID/URL that uniquely identifies the content on the system. The teaching data object ID is directed to the object ID in the teaching data. The action at a time when the pilot time code is reached may define an action taken at a time when the time in the pilot time code reaches the start position of the time code of the content or the set start time code. For example, playback, stopping, and video effects are specified. In the action at a time when the specified time code is reached, for each action to be specified, the pilot time code or the time code that the content has is determined as a reference, and the action to be executed at the time when the time code as the reference is reached or passed is specified. Here, "the time when... is passed" illustrates a behavior in which, for example, as the pilot time code jumps from the 8th second to the 15th second at once by a seek bar, for example, the audio that has been supposed to be played at the time when ten seconds have elapsed on the pilot time code is played from an appropriate audio position if it is within the playback range of the audio. The same behavior at the time of passage is also applicable to the action at the time when the pilot time code is reached, action at the completion of contents, and action at the completion of pilot time code as described below, for example, which are associated with the time code.

The start time code is directed to the start time of playback on the contents, and the end time code is directed to the end time of playback. **If** the start and end time codes are specified retroactively, the playback is reversed. The viewpoint-related information is directed to information that may be specified depending on the distribution form of the free viewpoint video, and may correspond to a camera ID in the case of the still image transmission form and the video transmission form, a multi-camera ID in the case of the multi-camera form, and a 4x4 view transformation matrix in the case of 3D point group data or 3D computer graphics, for example. Any expression method other than the view transformation matrix may be used if the camera position, camera direction (gazing point), and camera posture may be specified. The playback speed may be defined as 0.125, 0.25, 0.5, 0, 1, 1.25, 1.5, 2, 4, for example, from stop to variable speed playback.

In addition, the screen allocation data is directed to the allocation data for displaying multiple contents on one screen. The screen allocation data allows the user to specify the reference position of the screen, such as top left, top right, bottom left, bottom right, top, and bottom, for example, specify pixel measure, and set the ratio of the display region with respect to the entire screen, for example. The display region is not limited to a rectangle, but shapes such as regular circles, Pezier curves, spline curves, multiple straight lines, and polylines may also be specified. Another content may be layered on the top of one content and displayed, as in wipes. Further, one or more time codes and the corresponding display region forms at that time may also be specified. Moreover, specification that morphing is performed also allows a smooth change of form in shifting to a new display region form to be specified, and time for the change of the form may be optionally specified as well. The time code may be specified as the time when the display time of the corresponding screen object is reached, such as 0 seconds, and the time code may be specified using the autopilot time code as the reference as well.

Although the basic structure of the content teaching data is described above, the structure may also be the minimum structure when the content is expressed, which is configured by only pilot time code, teaching data object ID, and viewpoint-related data. The structure may also be the minimum structure configured by only the pilot time code, teaching data object ID, start time code, end time code, and viewpoint-related data, with the viewpoint-related data containing one or more time codes and the corresponding viewpoint-related information at that point in time.

FIG. 9 illustrates the structure of the annotation teaching data (audio) included in the teaching file. As shown in FIG. 9, the annotation teaching data (audio) includes pilot time code, object type, object ID/URL, teaching data object ID, action at a time when pilot time code is reached, action at a time when content is completed, action at a time when specified time code is reached, start time code, end time code, playback speed, and data.

The pilot time code is directed to the start time on autopilot. The object type is directed to content. The object ID/URL is directed to an ID/URL that uniquely identifies the position of the data on the system. The teaching data object ID is directed to the object ID on the teaching data. Actions at a time when the pilot time code is reached may specify playback, stop, and video effects, for example. As an action at the completion of content, the action to be taken at a time when the time code to terminate the playback of the content is reached may be specified. In the action at a time when the specified time code is reached, for each action to be specified, the pilot time code or the time code that the content has is determined as a reference, and the action to be executed at the time when the time code as the reference is reached or passed is specified. The start time code is directed to the start time of playback on the audio, and the end time code is directed to the end time of playback on the audio. The playback speed may be defined as 0.125, 0.25, 0.5, 0, 1, 1.25, 1.5, 2, 4, for example, from the playback stop to variable speed playback. As for the data, the audio data itself may be embedded rather than referenced. The playback speeds specified in the teaching data may be specified without affecting each other. For example, the playback speed of audio may be specified without interfering with the playback speed specified for the content. For example, the content is at 2x speed and the audio at 1x speed.

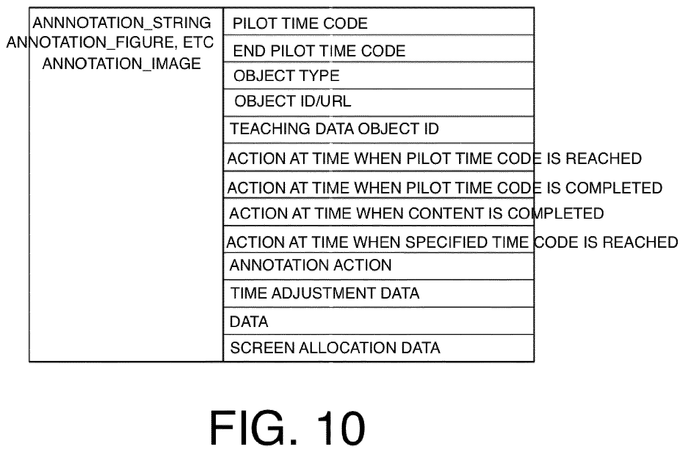

FIG. 10 illustrates the structure of annotation teaching data (strings, figures, and images, for example) included in the teaching file.

As shown in FIG. 10, the annotation teaching data (strings, figures, and images, for example) includes pilot time code, end pilot time code, object type, object ID/URL, teaching data object ID, action at a time when pilot time code is reached, action at a time when pilot time code is completed, action at a time when content is completed, action at a time when specified time code is reached, annotation action, time adjustment data, data, and screen allocation data.

The pilot time code is directed to the start time on autopilot. The end pilot time code is directed to the end time on autopilot. The object type is directed to content. The object ID/URL is directed to an ID/URL that uniquely identifies the position of the data on the system. The teaching data object ID is directed to the object ID on the teaching data. Actions at a time when the pilot time code is reached may specify playback, stop, and video effects, for example. Actions at a time when the pilot time code is completed may specify video effects, audio playback, and video wipe display playback, for example. In the action at a time when the specified time code is reached, for each action to be specified, the pilot time code or the time code that the content has is determined as a reference, and the action to be executed at the time when the time code as the reference is reached or passed is specified. Annotation actions may specify actions to be taken when the display region is clicked, tapped, or when a predetermined audio is input via the microphone, for example. These actions include, for example, optional audio output, turning back the time of the pilot time code, stopping playback of content for a predetermined period of time and outputting audio during that time, video effects, and video playback, for example. The above described actions may be specified in the same manner as in the actions at a time when pilot time code is reached, action at a time when pilot time code is completed, action at a time when content is completed, and action at a time when specified time code is reached, for example, as appropriate.

The time adjustment data is directed to data to operate with a time code that takes the adjustment time into account. The data may specify the strings, graphics, and images, for example, to be displayed, as well as the display position, and display style, for example. For the screen allocation data, if it is not set, the data is overlaid on the entire display screen in a layer above the content.

When the teaching data generated on the basis of the operations on the editing screen shown in FIG. 4 above is transmitted from the terminal device 2 for the editor, the video distribution device 1 receives it, and the teaching file generator 10f generates teaching files including these screen teaching data, content teaching data, and annotation teaching data on the basis of the received teaching data and stores the teaching files in the teaching file storage 14c.

The generated teaching files for autopilot are published on a website operated by the video distribution system 1, for example, and provided as appropriate, allowing the terminal device 3 for the viewer to receive the teaching file that the viewer wishes to view from among the teaching files. In the terminal device 3 for the viewer, the received teaching file is stored in the teaching file storage 31c, and on the basis of the teaching file, the video generator 21b generates contents that may be displayed on the terminal device 3, and plays and displays them on the display monitor 28.

At this time, since the teaching file for autopilot specifies the viewpoint of the contents (e.g., divided still image data), playback speed, presence or absence of zooming, and screen allocation, for example, playback is performed in accordance with the specified conditions. In addition, since the teaching file for autopilot also includes annotation teaching data for audio and text, for example, allowing the text and audio, for example, to be played back at the specified time point in synchronization with the playback in accordance with the annotation teaching data. Accordingly, the viewer acquires a teaching file for autopilot that matches her or his preferences and objectives, allowing her or him to automatically have the opportunity to view a content that is suitable for her or him without needing to change the viewpoint, for example, herself or himself.

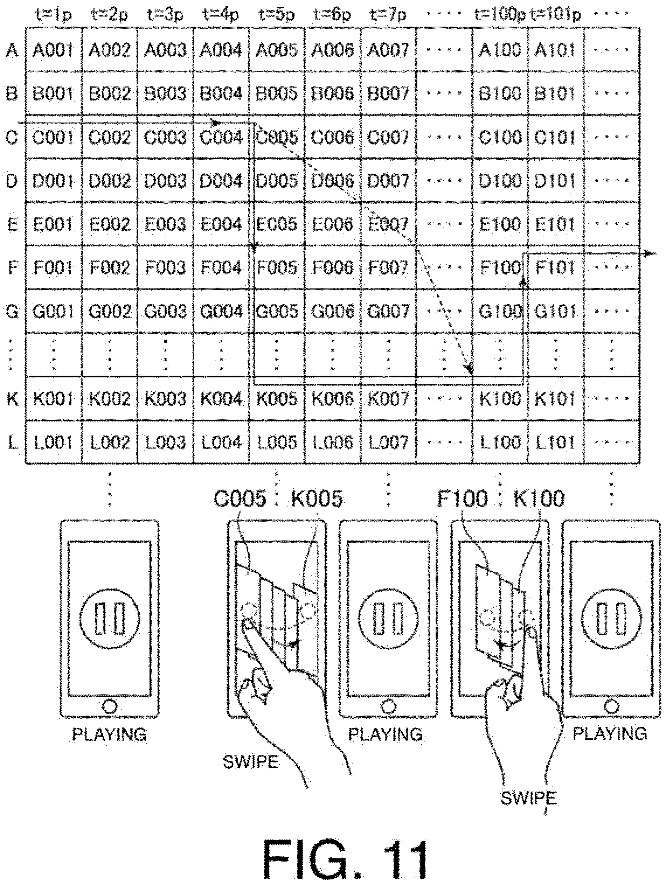

If a user operation is performed during the playback on the basis of the teaching file for autopilot on the terminal device 3 for the viewer, autopilot playback is temporarily suspended, and the screen is switched and playback is performed on the basis of the user operation. With reference to FIG. 11, this point will be described in detail below. During the autopilot playback, change of the playback speed in the autopilot time code, rewind, and move to any autopilot time code, for example, may be available without interrupting the autopilot, except for switching the viewpoint, for example. The user operation described above also includes pressing a button or other UI for suspending autopilot.

FIG. 11 shows a table with an identification number as direction data on the vertical axis and time data on the horizontal axis in which file names of still image data corresponding to the vertical and horizontal axes are shown. The still image data to be displayed will transition in response to user operations as illustrated below in FIG. 11. This means that the still image data corresponding to the cell through which the solid arrow in FIG. 11 passes is displayed on the terminal device 3 for the viewer.

First, in a state where the still image data of C001 is played back in accordance with the teaching file for autopilot, the video is played back sequentially in chronological order. When, during the execution of automatic playback, the specifying value receiver 10d receives a direction specifying value by a swipe operation by the viewer, the automatic playback on the basis of the teaching file for autopilot is temporarily suspended, and the selector 10e selects corresponding still image data (C005 to K005) using the time data (t=5p) of the still image data corresponding to a time when the direction specifying value is received as a reference on the basis of the amount of change of the direction specifying value during the swipe operation.

That is, the selector 10e uses the time when the direction specifying value is received (t=5p) as reference, and first selects the still image data (C005) corresponding to the position data (direction data) selected at the moment. In the process of changing the direction specifying value, the selector 10e selects still image data corresponding to the same time data, one frame at a time, in the order of identification number. When the still image data (K005) in which the direction specifying value is specified by the swipe operation is displayed, the image is once temporarily stopped. When the user then presses the playback start button again, the still image data corresponding to the direction specifying value at that time is continuously played back. Alternatively, the still image data corresponding to the direction specified value at that time may be continuously played back without being once temporarily stopped.

When the user performs the swipe operation again (t=100p), as described above, the selector 10e selects the still image data corresponding to the same time data, one frame at a time, in the order of the identification number (K100 to F100). After the still image data (F100) specified by the swipe operation is then displayed, the still image data corresponding to the same direction specifying value will continue to be played back if it is not once temporarily stopped. In the above description, the selector 10e selects the same time data as that of the still image data using the time data (t=5p) of the still image data corresponding to the time when the direction specifying value is received as reference. However, the embodiments are not limited to this.

That is, as shown by the dashed arrows, in the video distribution device according to the present invention, the selector 10e may use the time data (t=5p) of the still image data corresponding to the time when the direction specifying value is received as reference, and select the time data next to the already selected time data sequentially. In this case, the video will not be stopped during swiping, but will remain playing.

Further, when the specifying value receiver 10d does not receive a direction specifying value, and when the amount of change in the direction specifying value per unit time is less than the threshold value, the selector 10e selects the still image data such that the direction data are continuously connected. In contrast, the selector 10e selects the image data such that the direction data is intermittently connected when the amount of change in the direction specifying value per unit time is greater than or equal to the threshold value. Here, "intermittently" is directed to a fact that only a part of the data is acquired for the direction data that are successively lined up.

That is, when the operation recognition unit 29 determines that the amount of operation by the swiping operation is large due to the user 40 moving her or his finger large or fast, the still image data corresponding to the direction data that is away from the original direction data may be acquired without acquiring the still image data corresponding to the adjacent direction data. The terminal device 3 then displays still image data of the subject at the direction specifying value that changes on the basis of the direction specifying operation during the direction specifying operation using the still image data received from the selector 10e. In contrast, when the direction specifying operation is not performed, the terminal device 3 sequentially receives and displays, in chronological order, the still image data of the direction specifying value corresponding to the completion position of the direction specifying operation to display a pseudo-video from the direction corresponding to the completion position.

When returning from the above playback during which the viewpoint direction is switched on the basis of the operation of the viewer to the automatic playback on the basis of the teaching file for autopilot, the viewer may tap a predetermined button displayed on the playback screen of the terminal device 3 for the viewer, for example, to give a command to resume automatic playback on the basis of the teaching file for autopilot from the time point of interruption, or time point of switching.

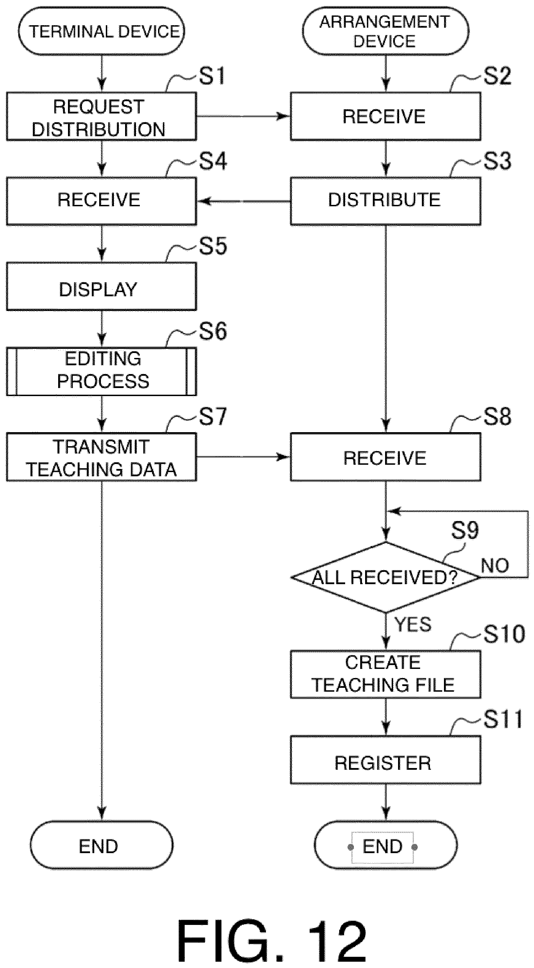

With reference to the flowchart in FIG. 12, the processing steps associated with the generation of a teaching file for autopilot by the video distribution system according to the embodiment of the present invention will be described.

This process assumes that in the terminal device 2 for the viewer, the controller 21 executes the editing program 31f and the display monitor 28 displays the editing screen 100 as shown in FIG. 4. However, the display form is not limited to that shown in FIG. 4.

When the selectable free viewpoint video data shown in the region 100a is selected on the editing screen 100, the request unit 21a makes a request to the video distribution device 1 for distribution of the free viewpoint video data (step S1). In the video distribution device 1, the acquisition unit 10b receives a distribution request (step S2), and the distributor 10a reads the free viewpoint video data associated with the distribution request from the content storage 14a, and distributes it to the terminal device 2 for the viewer (step S3).

In the terminal device 2 for the viewer, this free viewpoint video data is received (step S4), and the video generator 21b generates content that may be displayed on the terminal device 2, and displays the content on the region 100c and region 100d in the editing screen 100 displayed on the display monitor 28 (step S5). On the region 100d, the divided still image data are displayed, allowing the viewer to recognize the division units as well as the thumbnails and other information. On the region 100c, the video selected for editing is played back.

In the terminal device 2 for the viewer, the editing unit 21c then executes the editing process (step S6). The details of the editing process will be described in detail later. For example, selection of divided still image data (viewpoint information), playback speed, and addition of various annotations, for example, will be performed. When the editing process is completed, the editing unit 21c stores teaching data conceptually including screen teaching data, content teaching data, and annotation teaching data, for example, in the teaching file storage 31c, and also transmits the data to the video distribution device 1 (step S7).

In the video distribution device 1, the acquisition unit 10b receives this teaching data and stores it in the teaching file storage 14c (step S8). If the teaching data is then received from all the terminal devices 2 for the editors (step S9: Yes), the teaching file generator 10f generates the teaching file on the basis of the stored teaching data (step S10), and stores it in the above file storage 14c (step S11). As described above, a series of processes associated with the generation of the teaching file for autopilot are completed. The teaching files for autopilot stored in the teaching file storage 14c are published on a predetermined website, for example, for viewers in a selectable manner.

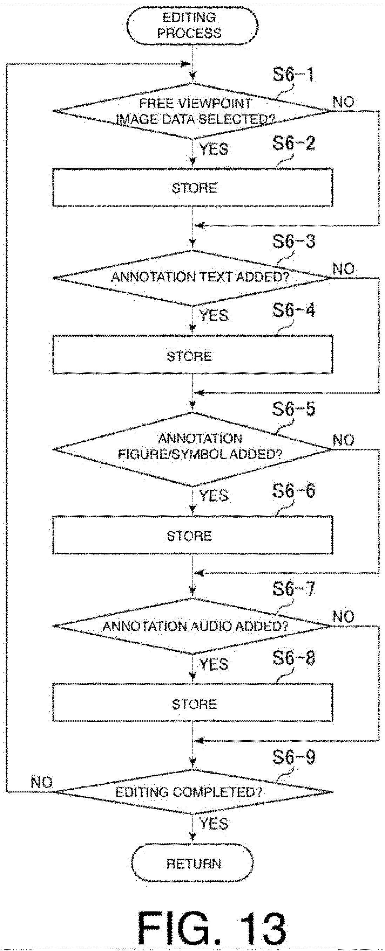

With reference to the flowchart in FIG. 13, the processing steps of the editing process performed in step S7 in FIG. 12 will be described in further detail.

Entering the editing process, the editing unit 21c determines whether content is selected (step S6-1). If content is selected (step S6-1: Yes), content teaching data is stored in the teaching file storage 31c (step S6-2). If a content is not selected (step S6-1: No), the process proceeds to step S6-3.

The content teaching data stored in the teaching file storage 31c in step S6-2 includes pilot time code, object type, object ID/URL, teaching data object ID, action at a time when pilot time code is reached, action at a time when content is completed, action at a time when specified time code is reached, start time code, end time code, viewpoint-related information, playback speed, zoom-related information, and screen allocation information. These details are as described above.

The editing unit 21c then determines whether annotations (text) are added (step S6-3). If the annotations (text) are added (step S6-3: Yes), the annotation teaching data (text) is stored in the teaching file storage 31c (step S6-4). If annotations (text) are not added (step S6-3: No), the process proceeds to step S6-5.

The annotation teaching data (text) stored in the teaching file storage 31c in step S6-4 includes pilot time code, end pilot time code, object type, object ID/URL, teaching data object ID, action at a time when pilot time code is reached, action at a time when pilot time code is completed, action at a time when specified time code is reached, annotation action, time adjustment, data, and screen allocation information. These details are as described above.

The editing unit 21c then determines whether annotations (figure and symbol, for example) are added (step S6-5). If the annotations (figure and symbol, for example) are added (step S6-5: Yes), the annotation teaching data (figure and symbol, for example) is stored in the teaching file storage 31c (step S6-6). If annotations (figure and symbol, for example) are not added (step S6-5: No), the process proceeds to step S6-7.

The annotation teaching data (figure and symbol, for example) stored in the teaching file storage 31c in step S6-6 includes pilot time code, end pilot time code, object type, object ID/URL, teaching data object ID, action at a time when pilot time code is reached, action at a time when pilot time code is completed, action at a time when specified time code is reached, annotation action, time adjustment, data, and screen allocation information. These details are as described above.

The editing unit 21c then determines whether annotation (audio) is added (step S6-7). If the annotation (audio) is added (step S6-7: Yes), the annotation teaching data (audio) is stored in the teaching file storage 31c (step S6-8). **If** annotation (audio) is not added (step S6-7: No), the process proceeds to step S6-9.

The annotation teaching data (audio) stored in the teaching file storage 31c in step S6-8 includes pilot time code, object type, object ID/URL, teaching data object ID, action at a time when pilot time code is reached, action at a time when content is completed, action at a time when specified time code is reached, start time code, end time code, playback speed, and data. These details are as described above.

As described above, the editing unit 21c determines whether all editing is completed (step S6-9). If all editing is not completed (step S6-9: No), the process returns to step S6-1 and repeats the above process. If all editing is completed (step S6-9: Yes), the editing process is completed and the process returns to step S8 or later in FIG. 12.

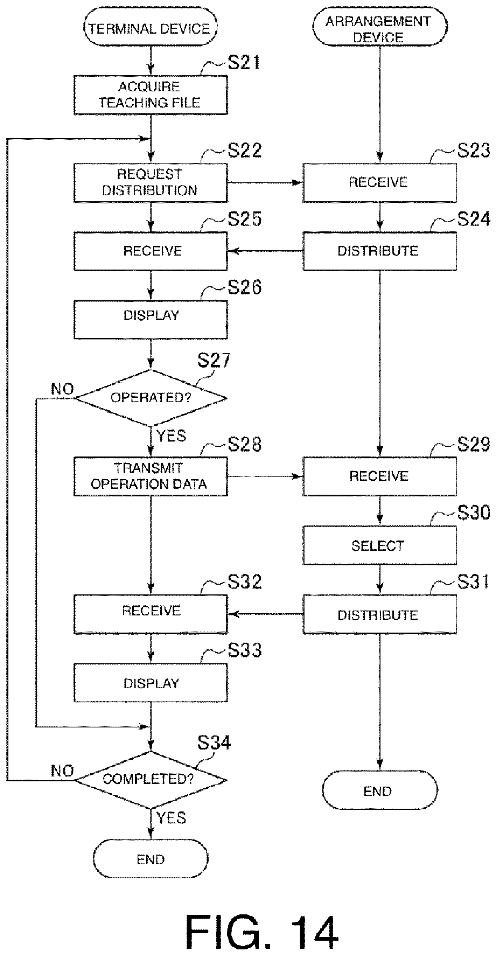

Next, with reference to the flowchart in FIG. 14, the process of distributing teaching files for autopilot by the video distribution system according to the embodiment of the present invention will be described.

First of all, as a premise, the video distribution device 1 presents a plurality of selectable teaching files for autopilot on a website. In the terminal device 3 for the viewer, the acquisition unit 21d acquires the teaching file and executes playback on the basis of the teaching file (step S21). With the start of playback associated with this autopilot, the request unit 21a makes a request to the video distribution device 1 to distribute the free viewpoint video data (including divided still image data, for example) taught by the content teaching data (step S22).

The video distribution device 1 receives a distribution request (step S23), and the distributor 10a reads and distributes the corresponding free viewpoint video data from the content storage 14a (step S24). In the terminal device 3 for the viewer, the free viewpoint video data is received (step S25), and the video generator 21b generates content that may be displayed on the terminal device 3 on the basis of the free viewpoint video data, and plays and displays it on the display monitor 28 (step S26). In the process of playback associated with this autopilot, it is determined whether any user operation (e.g., screen swipe operation), for example, is performed (step S27). If the screen swipe operation is not performed (step S27: No), the playback display on the basis of the teaching file for autopilot is continued until the playback is completed (step S34).

In contrast, if the user operation is performed in the process of playback associated with the autopilot (step S27: Yes), the controller 21 transmits the operation data (including the direction specifying value) to the video distribution device (step S28). The video distribution device 1 receives the operation data and stores it in the operation data storage 14b (step S29). The selector 10e then selects the free viewpoint video data (still image data) in which the direction specifying value is specified by the user operation using the time when the direction specifying value is received as reference (step S30), and the distributor 10a distributes the selected free viewpoint video data (still image data) to the terminal device 3 for the viewer (step S31).

In the terminal device 3 for the viewer, the acquisition unit 21d receives this selected free viewpoint video data (still image data) (step S32), and the video generator 21b generates content that may be displayed on the terminal device 3 and switches the display on the display monitor 28 (step S33). The controller 21 then determines whether the playback is to be completed (step S34). **If** the playback is not to be completed, the process returns to the above step S22 and repeats the process above. If the playback is to be completed, the process terminates the series of processes.

This completion of playback includes the completion of automatic playback on the basis of the teaching file for autopilot, and the completion of playback when the autopilot is temporarily suspended on the basis of the user operation and playback on the basis of the user operation is performed.

As described above, the video distribution system, for example, according to the embodiment of the present invention, achieves the following advantages.

According to the video distribution system, for example, of the embodiment of the present invention, the video distribution system is capable of generating a teaching file for autopilot, allowing the terminal device for the viewer to perform automatic playback on the basis of the teaching file for autopilot if the viewer acquires the teaching file. At this time, since the teaching file includes various annotation teaching data such as audio, text, images, and graphics, additional effect is automatically reproduced along with the playback. Accordingly, the viewer simply acquires and executes the teaching file that meets her or his needs without needing to switch viewpoints, for example, by herself or himself, allowing the viewer to enjoy playback with the desired switching of viewpoints, for example,

Such an autopilot responds to the needs of viewers that feels cumbersome to view the video while changing their own viewpoints, that do not know which point in time is useful, or that is desirous of viewing in a time-saving manner all at once. As an example of use, live video, for example, may first be published as free viewpoint video data (including divided still image data), and then teaching files generated on the basis of teaching data edited by the editor may be published later. For example, when free viewpoint video data related to live performances is handled, teaching files that enable playback following only specific artists may be generated.

Further, although the basic concept is to generate various teaching data in the terminal device 2 for the editor as described above and generate teaching files for autopilot in the video distribution device 1, user operations (e.g., swipe operation) in the terminal device 2 for the editor or the terminal device 3 for the viewer may be recorded and used as a part of the teaching data.

If a user operation (e.g., a swipe operation) is performed during the process of automatic playback on the basis of a teaching file for autopilot, freedom may be achieved such that the automatic playback may be temporarily suspended and the viewpoint may be switched on the basis of the user operation, for example.

In addition to this, teaching files for autopilot may be re-edited by forking (branching and copying), merging (joining), cloning (copying), for example, allowing the published teaching files to be shared by multiple people and thus to be expected to develop into those diverse.

Here, the embodiments of the present invention also include the followings.

The teaching files for autopilot may be generated on the basis of free viewpoint video data in live broadcast (live stream). For example, a teaching file for autopilot automatically generated by machine learning may be distributed live (live distribution), or it may be manually created (collaborative editing work may also be performed), and as live, after an optional time (e.g., 5 minutes delay), the viewer may playback the content from the start of the live with a delay of the optional time. The teaching files for autopilot created by complex machine learning may also be viewed and edited by the editor for live distribution (live distribution). Further, if human work cannot be completed in time, normal free viewpoint video data may be distributed for a certain period of time, and the teaching file for autopilot may be distributed live again (live distribution) at a stage when it is created. In the joint editing of teaching files for autopilot, the autopilot may be created immediately by using already established joint editing techniques, exclusion control in the own timeline, or edit merging using the operational transformation (OT) method, for example. Moreover, even for on-demand free viewpoint video data, teaching files for autopilot may be automatically generated by machine learning, editors are allowed to view and edit the teaching files for autopilot generated by machine learning, and collaborative editing work on teaching files for autopilot may also be available.

In the above flow, a "video file" may be generated up to the point where the work is completed during the creation of the teaching file for autopilot, which may then be distributed as a regular video file. In this case, the video file may be published on a dedicated website, for example, and may be viewed by streaming or downloaded depending on the authorization. Furthermore, information on the free viewpoint video content included in the component in each time code for the video file may be embedded in the video as metadata (e.g., in XMP format, for example) or associated with the video as a separate file and made available (the location of the file may be described in XMP, for example, or, in the case of the HLS format, the location and contents of the file may be described in an m3u8 file, for example, or an inquiry to the specified server or other method may be used to obtain the contents and location of the file). The metadata is referred to, allowing the corresponding video player to transition from the video file to the free viewpoint video content currently being viewed during playback, for example, and change the viewpoint to any viewpoint, as well as return to the point at which the video file is transitioned and resume playback.

In addition, how each individual views free viewpoint video and approximate attributes may be learned, and the transmitted free viewpoint video may be automatically switched on the basis of the learning results. The content owner may also manually create the file (collaborative work is also possible, and the collaborative editing function may be granted to general users on the basis of their authorization), and then distribute the teaching file for live autopilot after a predetermined time has elapsed.

Also, on the basis of the viewing statistics of preceding users that have viewed the free viewpoint video, teaching files for live autopilot may be generated and distributed from, for example, the most frequently viewed viewpoints. Video streaming data, for example, in HLS format, may be sequentially generated from the teaching file for live autopilot and distributed live (live distribution). In addition, information on the free viewpoint video content included in the component in each time code for the video streaming data may be embedded in the video as metadata (e.g., in XMP format, for example) or associated with the video as a separate file and made available (the location of the file may be described in XMP, for example, or, in the case of the HLS format, the location and contents of the file may be described in an m3u8 file, for example, or an inquiry to the specified server or other method may be used to obtain the contents and location of the file). The metadata is referred to, allowing the corresponding video player to transition from the video file to the free viewpoint video content currently being viewed during playback, for example, and change the viewpoint to any viewpoint, as well as return to the point at which the video file is transitioned and resume playback.

In addition, if the target or genre preferred by the user is retained as attribute information, a teaching file for autopilot that embodies content playback with a viewpoint and magnification, for example, suitable for that user may be generated on the basis of such attribute information and provided to that user. For example, if "ball" is selected for sports, a teaching file for autopilot may be generated and distributed such that the ball is always tracked by object recognition.

### [Description of the Reference Numerals]

1...video distribution device, 2...terminal device, 3...terminal device, 4...communication network, 10...controller, 10a...distributor, 10b...acquisition unit, 10c...data generator, 10d...specifying value receiver, 10e...selector, 10f...teaching file generator, 11...RAM, 12...ROM, 13...MPEG decoding module, 14... storage, 14a...content storage, 14b...operation data storage, 14c...teaching file storage, 14d...OS, 14e...data acquisition program, 14f...data generation program, 14g...teaching file generation program, 14h...selection program, 14i...distribution program, 15...I/O port, 16...hub, 17...router, 21...controller, 21a...request unit, 21b...video generator, 21c...editing unit, 21d...acquisition unit, 22... RAM, 23...ROM, 24...JPEG code module, 25...I/O port, 26...wireless communicator, 27...drawing unit, 28 ...display monitor, 29...operation recognition unit, 30...operation unit, 31...storage, 31a...content storage, 31b...operation data storage, 31c...teaching file storage, 31d...OS, 31e...browser program, 31f...editing program.

## Claims

1. A video distribution system comprising a video distribution device and a terminal device, wherein
the video distribution device includes:
a distributor, which distributes free viewpoint video data;
a first acquisition unit, which acquires teaching data from the terminal device; and
a teaching file generator, which generates a teaching file for automatic playback on the basis of the teaching data, and
the terminal device includes:
a second acquisition unit, which acquires free viewpoint video data from the video distribution device;
a video generator, which generates video on the basis of the free viewpoint video data;
a display, which displays the video; and
an editing unit, which edits the free viewpoint video data and transmits the teaching data.

2. The video distribution system according to claim 1, wherein the terminal device further includes a teaching file generator, which generates a teaching file on the basis of the teaching data and the free viewpoint video data.

3. The video distribution system according to claim 1 or 2, wherein the video distribution device further includes a content generator, which generates content data on the basis of the teaching file and the free viewpoint video data.

4. The video distribution system according to any one of claims 1 to 3, wherein the teaching data includes at least one of the following: screen teaching data, which teaches a screen form, content teaching data, which teaches a content, and annotation teaching data, which teaches addition of at least one of text, graphic, symbol, and audio.

5. The video distribution system according to claim 4, wherein the teaching data includes
operation data of the terminal device.

6. The video distribution system according to any one of claims 1 to 3, wherein the terminal device, in the editing, displays an editing screen on the display, and
the editing screen includes:
a first region, which presents selectable content;
a second region, which plays the selected video; and
a third region, which indicates the free viewpoint video data in selectable units.

7. A video distribution device capable of communicating with a terminal device, the video distribution device comprising:
a distributor, which distributes free viewpoint video data;
a first acquisition unit, which acquires teaching data from the terminal device; and
a teaching file generator, which generates a teaching file for automatic playback on the basis of the teaching data, wherein
the teaching data includes at least one of the following: screen teaching data, which teaches a screen form, content teaching data, which teaches a content, and annotation teaching data, which teaches addition of at least one of text, graphic, symbol, and audio.

8. The video distribution device according to claim 7, further comprising a content generator, which generates content data on the basis of the teaching file and free viewpoint video data.

9. A program causing a computer to serve as:
a distributor, which distributes free viewpoint video data;
a first acquisition unit, which acquires teaching data from a terminal device; and
a teaching file generator, which generates a teaching file for automatic playback on the basis of the teaching data, wherein
the teaching data includes at least one of the following: screen teaching data, which teaches a screen form, content teaching data, which teaches a content, and annotation teaching data, which teaches addition of at least one of text, graphic, symbol, and audio.

10. A video distribution method by a video distribution system comprising a video distribution device and a terminal device, the method including the steps of:
causing the video distribution device to distribute free viewpoint video data;
causing the terminal device to acquire free viewpoint video data from the video distribution device, generate video on the basis of the free viewpoint video data, display the video, edit the free viewpoint video data, and transmit teaching data; and
causing the video distribution device to acquire the teaching data from the terminal device and generate a teaching file for automatic playback on the basis of the teaching data.

11. The video distribution method according to claim 10, wherein the teaching data includes at least one of the following: screen teaching data, which teaches a screen form, content teaching data, which teaches a content, and annotation teaching data, which teaches addition of at least one of text, graphic, symbol, and audio.

## Patentansprüche

1. Videoverteilungssystem, umfassend eine Videoverteilungsvorrichtung und eine Endgerätvorrichtung, wobei
die Videoverteilungsvorrichtung aufweist:
einen Verteiler, der Free-Viewpoint-Videodaten verteilt;
eine erste Erfassungseinheit, die Lehrdaten von der Endgerätvorrichtung erfasst; und
einen Lehrdateigenerator, der eine Lehrdatei zur automatischen Wiedergabe auf der Grundlage der Lehrdaten erzeugt, und
die Endgerätvorrichtung aufweist:
eine zweite Erfassungseinheit, die Free-Viewpoint-Videodaten von der Videoverteilungsvorrichtung erfasst;
einen Videogenerator, der ein Video auf der Grundlage der Free-Viewpoint-Videodaten erzeugt;
eine Anzeige, die das Video anzeigt; und
eine Bearbeitungseinheit, die die Free-Viewpoint-Videodaten bearbeitet und die Lehrdaten überträgt.

2. Videoverteilungssystem nach Anspruch 1, wobei die Endgerätvorrichtung ferner einen Lehrdateigenerator aufweist, der eine Lehrdatei auf der Grundlage der Lehrdaten und der Free-Viewpoint-Videodaten erzeugt.

3. Videoverteilungssystem nach Anspruch 1 oder 2, wobei die Videoverteilungsvorrichtung ferner einen Inhaltsgenerator aufweist, der Inhaltsdaten auf der Grundlage der Lehrdatei und der Free-Viewpoint-Videodaten erzeugt.

4. Videoverteilungssystem nach einem der Ansprüche 1 bis 3, wobei die Lehrdaten mindestens eines der folgenden aufweisen: Bildschirm-Lehrdaten, die eine Bildschirmform lehren, Inhalts-Lehrdaten, die einen Inhalt lehren, und Annotations-Lehrdaten, die das Hinzufügen von mindestens einem von Text, Grafik, Symbol und Audio lehren.

5. Videoverteilungssystem nach Anspruch 4, wobei die Lehrdaten Betriebsdaten der Endgerätvorrichtung aufweisen.

6. Videoverteilungssystem nach einem der Ansprüche 1 bis 3, wobei die Endgerätvorrichtung bei der Bearbeitung einen Bearbeitungsbildschirm auf der Anzeige anzeigt, und
der Bearbeitungsbildschirm aufweist:
einen ersten Bereich, der auswählbare Inhalte darstellt;
einen zweiten Bereich, der das ausgewählte Video wiedergibt; und
einen dritten Bereich, der die Free-Viewpoint-Videodaten in auswählbaren Einheiten anzeigt.

7. Videoverteilungsvorrichtung, geeignet zur Kommunikation mit einer Endgerätvorrichtung, wobei die Videoverteilungsvorrichtung umfasst:
einen Verteiler, der Free-Viewpoint-Videodaten verteilt;
eine erste Erfassungseinheit, die Lehrdaten von der Endgerätvorrichtung erfasst; und
einen Lehrdateigenerator, der eine Lehrdatei zur automatischen Wiedergabe auf der Grundlage der Lehrdaten erzeugt, wobei
die Lehrdaten mindestens eines der folgenden aufweisen: Bildschirm-Lehrdaten, die eine Bildschirmform lehren, Inhalts-Lehrdaten, die einen Inhalt lehren, und Annotations-Lehrdaten, die das Hinzufügen von mindestens einem von Text, Grafik, Symbol und Audio lehren.

8. Videoverteilungsvorrichtung nach Anspruch 7, ferner umfassend einen Inhaltsgenerator, der Inhaltsdaten auf der Grundlage der Lehrdatei und der Free-Viewpoint-Videodaten erzeugt.

9. Programm, das einen Computer veranlasst, zu fungieren als:
ein Verteiler, der Free-Viewpoint-Videodaten verteilt;
eine erste Erfassungseinheit, die Lehrdaten von einer Endgerätvorrichtung erfasst; und
ein Lehrdateigenerator, der eine Lehrdatei zur automatischen Wiedergabe auf der Grundlage der Lehrdaten erzeugt, wobei
die Lehrdaten mindestens eines der folgenden aufweisen: Bildschirm-Lehrdaten, die eine Bildschirmform lehren, Inhalts-Lehrdaten, die einen Inhalt lehren, und Annotations-Lehrdaten, die das Hinzufügen von mindestens einem von Text, Grafik, Symbol und Audio lehren.

10. Videoverteilungsverfahren durch ein Videoverteilungssystem, umfassend eine Videoverteilungsvorrichtung und eine Endgerätvorrichtung, wobei das Verfahren die Schritte aufweist:
Veranlassen der Videoverteilungsvorrichtung, Free-Viewpoint-Videodaten zu verteilen;
Veranlassen der Endgerätvorrichtung, Free-Viewpoint-Videodaten von der Videoverteilungsvorrichtung zu erfassen, ein Video auf der Grundlage der Free-Viewpoint-Videodaten zu erzeugen, das Video anzuzeigen, die Free-Viewpoint-Videodaten zu bearbeiten und Lehrdaten zu übertragen; und
Veranlassen der Videoverteilungsvorrichtung, die Lehrdaten von der Endgerätvorrichtung zu erfassen und eine Lehrdatei zur automatischen Wiedergabe auf der Grundlage der Lehrdaten zu erzeugen.

11. Videoverteilungsverfahren nach Anspruch 10, wobei die Lehrdaten mindestens eines der folgenden aufweisen: Bildschirm-Lehrdaten, die eine Bildschirmform lehren, Inhalts-Lehrdaten, die einen Inhalt lehren, und Annotations-Lehrdaten, die das Hinzufügen von mindestens einem von Text, Grafik, Symbol und Audio lehren.

## Revendications

1. Système de distribution vidéo comprenant un dispositif de distribution vidéo et un dispositif de terminal, dans lequel :
le dispositif de distribution vidéo comprend :
un distributeur, qui diffuse des données vidéo à point de vue libre ;
une première unité d'acquisition, qui acquiert des données pédagogiques auprès du dispositif de terminal ; et
un générateur de fichiers pédagogiques, qui génère un fichier pédagogique pour la lecture automatique sur la base des données pédagogiques et
le dispositif de terminal comprend :
une deuxième unité d'acquisition, qui acquiert des données vidéo à point de vue libre auprès du dispositif de distribution vidéo ;
un générateur vidéo, qui génère une vidéo sur la base des données vidéo à point de vue libre ;
un écran, qui affiche la vidéo ; et
une unité de montage, qui édite les données vidéo à point de vue libre et transmet les données pédagogiques.

2. Système de distribution vidéo selon la revendication 1, dans lequel le dispositif de terminal comprend en outre un générateur de fichiers pédagogiques, qui génère un fichier pédagogique sur la base des données pédagogiques et des données vidéo à point de vue libre.

3. Système de distribution vidéo selon la revendication 1 ou 2, dans lequel le dispositif de distribution vidéo comprend en outre un générateur de contenu, qui génère des données de contenu sur la base du fichier pédagogique et des données vidéo à point de vue libre.

4. Système de distribution vidéo selon une quelconque des revendications 1 à 3, dans lequel les données pédagogiques comprennent au moins un des éléments suivants : données pédagogiques d'écran, qui présentent une forme d'écran, données pédagogiques de contenu, qui présentent un contenu et données pédagogiques d'annotation, qui présentent l'ajout d'au moins un élément parmi texte, graphique, symbole et audio.

5. Système de distribution vidéo selon la revendication 4, dans lequel les données pédagogiques comprennent les données de fonctionnement du dispositif de terminal.

6. Système de distribution vidéo selon une quelconque des revendications 1 à 3, dans lequel le dispositif de terminal, lors du montage, affiche un écran de montage sur l'écran et
l'écran de montage comprend :
une première zone, qui présente le contenu sélectionnable ;
une deuxième zone, qui lit la vidéo sélectionnée ; et
une troisième zone, qui indique les données vidéo à point de vue libre dans des unités sélectionnables.

7. Dispositif de distribution vidéo capable de communiquer avec un dispositif de terminal, le dispositif de distribution vidéo comprenant :
un distributeur, qui distribue des données vidéo à point de vue libre ;
une première unité d'acquisition, qui acquiert des données pédagogiques auprès du dispositif de terminal ; et
un générateur de fichiers pédagogiques, qui génère un fichier pédagogique pour une lecture automatique sur la base des données pédagogiques, dans lequel
les données pédagogiques comprennent au moins un des éléments suivants : données pédagogiques d'écran, qui présentent une forme d'écran, données pédagogiques de contenu, qui présentent un contenu et données pédagogiques d'annotation, qui présentent l'ajout d'au moins un élément parmi texte, graphique, symbole et audio.

8. Dispositif de distribution vidéo selon la revendication 7, comprenant en outre un générateur de contenu, qui génère des données de contenu sur la base du fichier pédagogique et des données vidéo à point de vue libre.

9. Programme amenant un ordinateur à jouer le rôle de :
un distributeur, qui distribue des données vidéo à point de vue libre ;
une première unité d'acquisition qui acquiert des données pédagogiques auprès d'un dispositif de terminal et
un générateur de fichiers pédagogiques, qui génère un fichier pédagogique pour une lecture automatique sur la base des données pédagogiques, dans lequel
les données pédagogiques comprennent au moins un des éléments suivants : données pédagogiques d'écran, qui présentent une forme d'écran, données pédagogiques de contenu, qui présentent un contenu et données pédagogiques d'annotation, qui présentent l'ajout d'au moins un élément parmi texte, graphique, symbole et audio.

10. Procédé de distribution vidéo par un système de distribution vidéo comprenant un dispositif de distribution vidéo et un dispositif de terminal, le procédé comprenant les étapes suivantes :
amener le dispositif de distribution vidéo à distribuer des données vidéo à point de vue libre ;
amener le dispositif de terminal à acquérir des données vidéo à point de vue libre auprès du dispositif de distribution vidéo, générer une vidéo sur la base des données vidéo à point de vue libre, afficher la vidéo, éditer les données vidéo à point de vue libre et transmettre les données pédagogiques ; et
amener le dispositif de distribution vidéo à acquérir des données pédagogiques auprès du dispositif de terminal et générer un fichier pédagogique pour une lecture automatique sur la base des données pédagogiques.

11. Procédé de distribution vidéo selon la revendication 10, dans lequel les données pédagogiques comprennent au moins un des éléments suivants : données pédagogiques d'écran, qui présentent une forme d'écran, données pédagogiques de contenu, qui présentent un contenu et données pédagogiques d'annotation, qui présentent l'ajout d'au moins un élément parmi texte, graphique, symbole et audio.
